# EUROPÄISCHE PATENTANMELDUNG

(11) **EP 0 841 837 A2**
(43) Veröffentlichungstag der Anmeldung: **13.05.1998**
(21) Anmeldenummer: 97890213.8
(22) Anmeldetag: 30.10.1997
(51) Int. Cl.: H05H 1/00, G01K 11/00

(54) **Verfahren zur Messung der Temperatur im Brennraum einer Brennkraftmaschine**

(30) Priorität: 06.11.1996 AT 646/96
(71) Anmelder: AVL List GmbH, 8020 Graz (AT)
(72) Erfinder: Hirsch, Alois, Dipl.-Ing., 8020 Graz (AT); Winklhofer, Ernst, Dipl.-Ing.Dr., 8565 St. Johann ob Hohenburg 1 (AT); Philipp, Harald Arnulf, Dipl.-Ing.Dr., 8071 Wegersfeld (AT)
(74) Vertreter: Babeluk, Michael, Dipl.-Ing. Mag., Patentanwälte Babeluk - Krause

(57) **Zusammenfassung**

Die Messung der Temperatur im Brennraum einer Brennkraftmaschine erfolgt mit folgenden Schritten:
- Bereitstellen einer in den Brennraum der Brennkraftmaschine mündenden Glasfaseroptik samt spektraler Auswerteeinheit,
- Erfassen von zumindest einer Spektralbande zumindest eines Radikales der Flamme oder der Verbrennungsgase im Brennraum während eines Arbeitstaktes,
- Annahme einer Boltzmannverteilung des Bandenspektrums der Flamme bzw. der Verbrennungsgase,
- Interpolieren eines eine Bolzmannverteilung aufweisenden Bandenspektrums aufgrund der gemessenen Spektrallinien,
- Zuordnen von Temperaturniveaus zu den Emissionsbanden.

Dadurch kann auf einfache Weise die Temperaturverteilung im Brennraum bestimmt werden.

## Beschreibung

Die Erfindung betrifft ein Verfahren zur Messung der Temperatur im Brennraum einer Brennkraftmaschine.

Die Entwicklung der Brennkraftmaschine zielt auf eine hohe Verbrennungstemperatur zur Verbesserung des thermodynamischen Wirkungsgrades hin. Daneben müssen aber die Spitzentemperaturniveaus reduziert werden, um die Bildung von Stickoxidemissionen zu vermindern. Dazu muß die genaue Temperaturverteilung während der Verbrennung im Brennraum bekannt sein. Die genaue Temperaturverteilungsbestimmung ist allerdings sehr aufwendig und erfordert umfangreiche Manipulationen an der Brennkraftmaschine.

Es ist die Aufgabe der Erfindung, ein einfaches Verfahren zur Messung der Temperatur im Brennraum während der Verbrennung für eine fremdgezündete Brennkraftmaschine zur Verfügung zu stellen.

Erfindungsgemäß wird dies durch folgende Schritte erreicht:
- Bereitstellen einer in den Brennraum der Brennkraftmaschine mündenden Glasfaseroptik samt spektraler Auswerteeinheit,
- Erfassen von zumindest einer Spektralbande zumindest eines Radikales der Flamme oder der Verbrennungsgase im Brennraum während eines Arbeitstaktes,
- Annahme einer Boltzmannverteilung des Bandenspektrums der Flamme bzw. der Verbrennungsgase,
- Interpolieren eines eine Boltzmannverteilung aufweisenden Bandenspektrums aufgrund der gemessenen Spektrallinien,
- Zuordnen von Temperaturniveaus zu den Emissionsbanden.

Die Emissionsspektren von Kohlenwasserstoff-Flammen beinhalten eine Vielzahl von abwechselnden Spektrallinien von Radikalen, welche während des Verbrennungsprozesses entstehen. Unter Verwendung von Boltzmann-Statistiken kann die Plasmatemperatur aus den gemessenen Linienintensitäten berechnet werden.

An sich ist es bekannt, das Linienspektrum eines Stoffes bzw. Körpers zur Bestimmung seiner Temperatur zu verwenden. Voraussetzung dafür ist es allerdings, daß eine sogenannte BoltzmannVerteilung der Spektrallinienintensität vorliegt. Da die Verbrennung bei Brennkraftmaschinen hochgradigen, stochastischen Einflüssen unterliegen, wurde von der Fachwelt bisher angenommen, daß die Spektralintensität ebenfalls stochastisch verläuft, und Boltzmann-Statistiken zur Ermittlung der Temperaturverteilung somit nicht verwendet werden können.

Für die vorliegende Erfindung war es daher um so überraschender, daß unter bestimmten Voraussetzungen bei der Verbrennung in einer Brennkraftmaschine eine Boltzmann-artige Verteilung der Emissionsspektrallinien vorliegt. Voraussetzung dafür ist, daß sich das Plasma in einem lokalen, thermodynamischen Gleichgewicht befindet. Wenn dies vorliegt, zeigen die einzelnen Teilchen eine Maxwell-Boltzmann-Geschwindigkeitsverteilung und die Gesamtzahl der angeregten Atome oder Moleküle weist dabei eine Boltzmann-artige Verteilung auf. Eine weitere Voraussetzung ist, daß das Plasma optisch dünn sein muß. Die gemessenen Intensitäten der Spektrallinien korrespondieren dabei mit der Gesamtanzahl der Teilchen.

Vorzugsweise sieht das erfindungsgemäße Verfahren vor, daß die Emissions-Spektrallinien zumindest eines Radikales aus der Gruppe OH, CH und C₂ erfaßt werden. Die Radikale OH, CH und C₂ zählen zu den häufigsten, während des Verbrennungsablaufes entstehenden Radikalen. Das OH-Radikal beispielsweise ist ein vorherrschendes Zwischenprodukt jeder Kohlenwasserstoff-Flamme mit starken Emissionsbändern nahe der UV-Strahlung. Es wird sowohl in der Flammenfront als auch in den Verbrennungsprodukten hinter der Flammenfront gebildet. Die geeignetste spektrale Bande von OH liegt bei 306 nm . Sie zeigt viele geeignete Spektrallinien, welche sich nicht mit den Linien anderer Moleküle überlappen.

Bei fremdgezündeten Brennkraftmaschinen findet man ein lokales, thermodynamisches Gleichgewicht bei Gasdruckniveaus in Bereichen zwischen 0,5 bis 7Mpa und bei mittleren Temperaturniveaus im Bereich von 1500 bis 3000K. In dieser Druck-Temperatur-Region beträgt die freie Weglänge der Gasmoleküle zwischen 15 und 70nm. Daher sind diese Plasmas dominiert von Kollisionen untereinander, systematische Abweichungen vom lokalen thermodynamischen Gleichgewicht sind sehr unwahrscheinlich. Innerhalb der Lebensdauer von angeregten OH-Radikalen (1,6µs) gehen gebildete angeregte OH-Radikale mehr als 10000 Kollisionen untereinander ein, bevor die Abstrahlung eines Lichtquantes erfolgt. Daher gehen die beobachteten spektralen Bänder auf angeregte OH-Radikale zurück, welche sich im thermodynamischen Gleichgewicht mit ihrer Umgebung befinden.

Die Erfindung wird anhand von Beispielen und eines Vergleiches mit analytisch gewonnenen Brennraumtemperaturen näher erläutert.

Es zeigen:
- Fig. 1a: eine Boltzmannverteilung von Emissionsbändern, während der Verbrennung,
- Fig. 1b: die daraus resultierenden Temperaturen,
- Fig. 2: ein Temperatur-Kurbelwinkeldiagramm eines weiteren Meßbeispieles.

Um die optische Dichte einer Flamme zu messen, wurde ihre Selbstabsorption in einer mit Glasfenster ausgestatteten Versuchsbrennkraftmaschine gemessen. Selbstabsorption bei Wellenlängen von 310nm unterliegt typischen Verlusten von 15 bis 20% der Lichtintensität über dem Brennkammerdurchmesser. Bei einer Brennkraftmaschine mit einem Brennkammerdurchmesser von 80mm wurde die Messung bei 15° Kurbelwinkel nach dem oberen Totpunkt des Kolbens gemessen. Zu diesem Zeitpunkt füllte die Flamme die Brennkammer zur Gänze aus. Da die aktuellen Temperaturmessungen mit 15mm optischer Weglänge durchgeführt wurden, konnten Verluste durch Selbstabsorption vernachlässigt werden.

Die Fig. la zeigt ein Beispiel einer Boltzmannverteilung von Emissionsbändern, wobei die Intensität I der Spektrallinien über den Energieniveaus E aufgetragen ist. In Fig. lb sind die resultierenden Temperaturwerte T für einen kompletten Motorzyklus dargestellt, wobei CA den Kurbelwinkel bedeutet. Das Spektrum wurde nahe der den Verbrennungsbeginn bildenden Zündkerze aufgenommen. Die Meßgenauigkeit betrug +/- 100K.

Die spektroskopisch gemessenen Temperaturwerte Ts liegen bedeutend über den aufgrund des Zylinderdruckes berechneten mittleren Temperaturen Ttd, die auf dem Weg der thermodynamischen Analyse gewonnen wurde. Um diese Diskrepanz zu erklären, wurde ein vereinfachtes Verbrennungsmodell entwickelt.

Berücksichtigt man, daß der erste Teil der Verbrennung bei einem relativ niedrigen Druck stattfindet, und das Verbrennungsgas weiter durch den folgenden Druckanstieg aufgrund der fortgesetzten Verbrennung des Kraftstoffes erhitzt wird, dann sollte der Ort der Zündkerze die heißesten Gase aufweisen, wenn man annimmt, daß kein bedeutender Gasfluß stattfindet. Die spektral im Bereich der Zündkerze ermittelten Temperaturwerte repräsentieren dann die Maximaltemperaturen im Brennraum. Diese Hypothese konnte mit einigen Viel-Zonen-Modell der Verbrennungskammer unter folgenden Annahmen verifiziert werden:
1. Jede Zone weist die gleiche Masse auf. Zuerst verbrennt die Masse der Zone 1 komplett, dann die der Zone 2, u.s.w. Die Zonen bestehen nicht aus festen Volumina, sondern aus spezifischen Molekülen. Diffusion ist im Modell nicht vorgesehen. Die Temperatur wird in jeder Zone als gleichförmig angenommen.
2. Der Zylinderdruck und die Verbrennungsrate werden von aktuellen Messungen bestimmt.
3. Die Temperatur in jeder Zone wird beeinflußt durch die Wärmeübertragung und die adibate Kompression gemäß dem Druckanstieg.

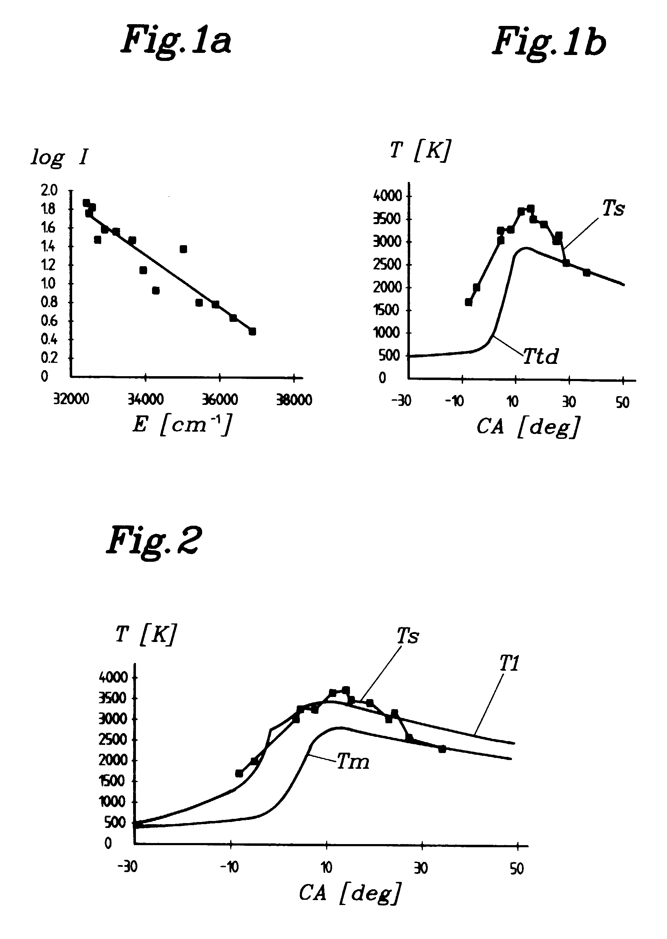

Fig. 2 zeigt die spektroskopisch gewonnenen Temperaturwerte Ts für einen kompletten Motorzyklus. Die mittlere Temperatur Tm und die maximale Temperatur T1 wurden gemäß dem beschriebenen Viel-Zonen-Modell berechnet. Ein Vergleich der Resultate bestätigt, daß die lokale Flammentemperatur in fremdgezündeten Brennkraftmaschinen gemessen werden kann unter Verwendung der Plasma-Diagnostik-Techniken. Die gemessenen Temperaturen passen sehr gut in die Resultate des Brennkammermodells.

## Patentansprüche

1. Verfahren zur Messung der Temperatur im Brennraum einer Brennkraftmaschine **gekennzeichnet durch** folgende Schritte:
- Bereitstellen einer in den Brennraum der Brennkraftmaschine mündenden Glasfaseroptik samt spektraler Auswerteeinheit,
- Erfassen von zumindest einer Spektralbande zumindest eines Radikales der Flamme oder der Verbrennungsgase im Brennraum während eines Arbeitstaktes,
- Annahme einer Boltzmannverteilung des Bandenspektrums der Flamme bzw. der Verbrennungsgase,
- Interpolieren eines eine Bolzmannverteilung aufweisenden Bandenspektrums aufgrund der gemessenen Spektrallinien,
- Zuordnen von Temperaturniveaus zu den Emissionsbanden.

2. Verfahren nach Anspruch 1, **dadurch gekennzeichnet,** daß die Emissions-Spektrallinien zumindest eines Radikales aus der Gruppe OH, CH und C₂ erfaßt werden.

3. Verfahren nach Anspruch 1 oder 2, **dadurch gekennzeichnet,** daß die Emissions-Spektrallinien in Abhängigkeit des Kurbelwinkels erfaßt werden.
